(19) Europäisches Patentamt
European Patent Office
Office européen des brevets

(11) **EP 2 743 726 B1**

(12) **EUROPEAN PATENT SPECIFICATION**

(45) Date of publication and mention
of the grant of the patent:
**13.05.2020   Bulletin 2020/20**

(21) Application number: **12197138.6**

(22) Date of filing: **14.12.2012**

(51) Int Cl.:
*H04L 29/06* (2006.01)　　　*H04W 12/08* (2009.01)
*H04W 48/04* (2009.01)　　　*H04W 4/02* (2018.01)
*G01S 11/10* (2006.01)　　　*G01S 11/06* (2006.01)

(54) **Methods and systems for assessing trust in a mobile ad hoc network**

Verfahren und Systeme zur Beurteilung des Vertrauens in ein mobiles Ad-hoc-Netzwerk

Procédés et systèmes pour évaluer la confiance dans un réseau ad hoc mobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.06.2014   Bulletin 2014/25**

(73) Proprietors:
 • **Koninklijke KPN N.V.**
  **3072 AP Rotterdam (NL)**
 • **Nederlandse Organisatie voor toegepast-natuurwetenschappelijk onderzoek TNO**
  **2595 DA 's-Gravenhage (NL)**

(72) Inventors:
 • **de Kievit, Sander**
  **Shinagawa-ku**
  **Tokyo 140-0013 (JP)**
 • **Trichias, Konstantinos**
  **2517 VH The Hague (NL)**
 • **Van den Ende, Abraham**
  **3329 KD Dordrecht (NL)**

 • **de Jongh, Johannes**
  **2612 HV Delft (NL)**

(74) Representative: **Wuyts, Koenraad Maria**
 **Koninklijke KPN N.V.**
 **Intellectual Property Group**
 **P.O. Box 25110**
 **3001 HC Rotterdam (NL)**

(56) References cited:
 **US-A1- 2001 022 558     US-A1- 2008 209 521**

 • **MALANEY R A: "A location enabled wireless security system", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA, IEEE, PISCATAWAY, NJ, USA, vol. 4, 29 November 2004 (2004-11-29), pages 2196-2200, XP010757920, DOI: 10.1109/GLOCOM.2004.1378399 ISBN: 978-0-7803-8794-2**

**Description**

FIELD OF INVENTION

The disclosure generally relates to methods and systems for mobile ad hoc network security. In particular, the disclosure relates to methods and systems for assessing the trust level of messages in a mobile ad hoc network based on signal characteristics.

BACKGROUND

The discussion below is merely provided for general background information and is not intended to be used as an aid in determining the scope of the claimed subject matter.

Mobile Ad Hoc Networks (MANETs) are autonomous networks where nodes are configured to wirelessly communicate with each other without any fixed infrastructure. MANETs are particularly useful for communication between moving nodes, whose network topology changes quickly.

Some MANETs lack the usual security features enjoyed by centrally managed networks. Traditional certificate-based security mechanisms used in these centralized networks often require a centralized certification authority or a trusted third party, and thus cannot be used easily in an ad hoc network because such nodes in a MANET by nature are not organized by a centralized entity. Furthermore, challenges exist relating to the storage and distribution of certificates, and the exchange of certificates over a limited bandwidth. When using a MANET which lacks any security mechanisms, any node can spoof messages and supply fraudulent information to other nodes in the network. Thus, the messages exchanged in a MANET typically cannot be trusted.

Some application of MANET networks, such as Vehicular Ad Hoc Networks (VANETs), may require some level of trust to be established between the nodes. VANETS provide a network to enhance road safety by enabling data exchange between vehicles and between vehicles and roadside infrastructure. Cars, other types of vehicles, or other suitable nodes may exchange information about at least one of: location, speed, direction, road conditions, upcoming traffic jams, slippery roads, maximum speeds, etc. To ensure safety of the drivers and passengers, the information being used to enhance road safety ought to be trusted to a certain extent. However, little existing mechanisms allow the nodes to efficiently verify the messages received from the VANET. For instance, nodes may sign messages and check the signature of the messages with a third party, but such a system is not ideal because it requires at least some access to a centralized certification authority.

Existing security mechanisms only provide limited trust. For instance, one such security mechanism relies on providing every node with a certificate / many certificates, which every node uses to sign some messages that they broadcast. A receiving node can then verify that the information in the message has not been tampered with by employing a signature verification algorithm. In order to do so, the receiving node has to obtain the certificate of the sending node if it does not have it already and ideally, the receiving node also checks that the certificate is valid by asking a certificate authority. The last step requires an online connection of which might not be available at the time of verification.

Another reason why current security mechanism might not provide sufficient trust (even if the online connection is available) is that the information in the message might be corrupted by malicious intent or malfunctioning before it enters the security mechanism. For instance, the driver might tamper with the module that is installed in a car, one or more sensors in the car might fail, a system on which the positioning relies (such as GPS) might fail or the software might contain bugs.

US2008/0209521 discloses a method for providing location enabled security services in a wireless network are. In the method, a network access request from a node requesting access to the wireless network is received. A probability level for a position for the requesting node is calculated using position information claimed by the requesting node and position information about the requesting node derived from signal measurements for the requesting node received by at least one existing authorised node in the wireless network. Access for the requesting node to the wireless network is denied if the probability level does not satisfy a specified threshold condition for network security. Access for the requesting node to the wireless network is granted if the probability level does satisfy the specified threshold condition.

Accordingly, there is a need to provide a system for verifying messages within a MANET that at least alleviates some of these problems.

SUMMARY

The present invention is defined by the subject matter of the independent claims. Preferred embodiments are defined by the dependent claims.

BRIEF DESCRIPTION OF THE DRAWINGS

Aspects of the invention will be explained in greater detail by reference to exemplary embodiments shown in the drawings, in which:

FIG. 1 shows an exemplary ad hoc network, according to one embodiment of the disclosure;
FIG. 2 shows an exemplary cross-layer communication in an illustrative network stack, according to one embodiment of the disclosure;
FIGS. 3A-B show exemplary messages transmitted at different times, according to one embodiment of the disclosure;
FIG. 3C shows exemplary calculations relating to the relative velocity information, according to one embodiment of the disclosure.
FIGS. 4A-B show exemplary messages transmitted at different times, according to one embodiment of the disclosure;
FIGS. 5A-B show exemplary messages transmitted at different times, according to one embodiment of the disclosure;
FIG. 6 shows exemplary messages transmitted by various nodes, according to one embodiment of the disclosure;
FIG. 7 shows exemplary messages transmitted by various nodes within a geographical environment, according to one embodiment of the disclosure; and
FIG. 8 shows an exemplary node and parts therein according to one embodiment of the disclosure.

DETAILED DESCRIPTION

Throughout the disclosure, various embodiments have been described in the context of Vehicular Ad Hoc Networks. However, one skilled in the art would appreciate that the embodiments are also intended and are suitable for other types of Mobile Ad Hoc Networks, such as military ad hoc networks. Generally speaking the embodiments work for a network with moving nodes, where the disclosed signal characteristics may be measured.

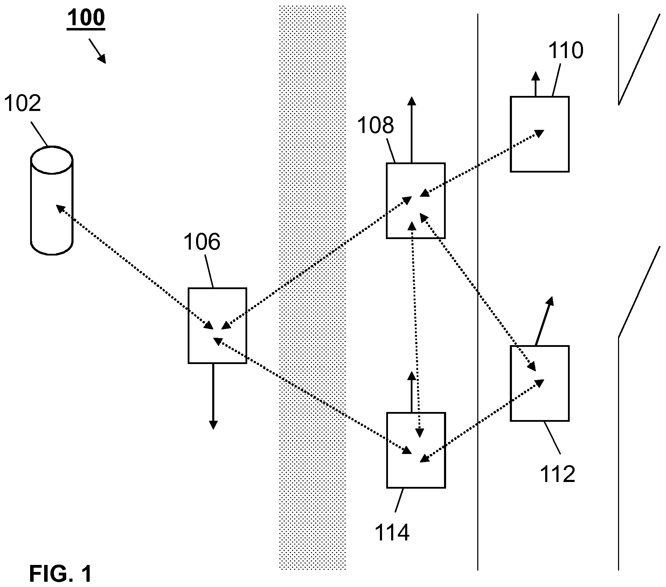

FIG. 1 shows an exemplary ad hoc network, according to one embodiment of the disclosure. Generally, the ad hoc network, also referred to as a Mobile Ad Hoc Network ("MANET") may be used by mobile nodes to communicate with each other. In an illustrative application, a MANET can be used for vehicles such as cars, and such a network is referred to as a Vehicular Ad Hoc Network ("VANET"). The nodes in a VANET are typically moving, e.g., vehicles, persons, animals, etc. In some cases, some of the nodes may be fixed to stationary objects or places, e.g., roadside infrastructure.

The exemplary VANET 100, shown in an illustrative highway environment, comprises a stationary node 102 and mobile nodes 106, 108, 110, 112, and 114. Over the VANET, each node may communicate with at least some of the other nodes in the VANET using messages. The messages may exchange application information such as location information/position information, velocity information, speed information, heading information, direction information, road conditions, location information of upcoming traffic jams, maximum speed information, existence of a collision, visibility information, etc.

The ad hoc nature allows vehicles to form such VANETS anywhere to exchange road information that can improve road safety. However, the same nature of the ad hoc network prevents any conventional security measures such as public key infrastructure or certificate security systems to be used efficiently. In some situations, conventional security measures cannot be used at all because some measures may require the nodes in the ad hoc network to have an online connection and that is not always possible. Accordingly, some means are needed to verify the authenticity or assess the trust level of nodes and/or messages being received from such a network.

A node, e.g., node 106 may receive application information carried in messages from other nodes, e.g., stationary node 102, moving node 108, and moving node 114. Likewise, node 108 may receive application information from node 106, node 114, and node 110. A node, e.g., node 106, may also forward application information received from another node, e.g., node 102, to yet another node, e.g., node 108. Likewise, node 108 may forward application information received from node 106 to node 110. The dotted arrows show merely illustrative communications between nodes, and are not meant to be limiting and/or exhaustive. A security mechanism described herein enables a node to verify that the application information received from a certain node is indeed trustworthy. For instance, node 108 should have some mechanism for verifying that the application information, e.g., identifying information, velocity information, position/location information, as reported by node 106 is not fraudulent. Generally speaking, application information comprises information that is reported by the node, which may require verification to determine whether the information being reported can be trusted. The nodes may be equipped with an application information extractor for extracting application information in the received messages.

The messages exchanged over the air in such a network may have at least one signal characteristic. In some embodiments, the nodes are equipped with a signal characteristic measuring module for measuring the at least one signal characteristic. The signal characteristics relate to the physical properties of a wireless signal, which may be detected and/or measured by a sensor or another suitable signal characteristic measuring module of a node. Signal characteristics may include: frequency information, received signal strength indicator (RSSI) information, bit error rate (BER) information, signal to noise ratio (SNR) information, angle (of receipt) information, and direction/heading information.

In some embodiments, the signal characteristics may have at least one established relationship to application information such as velocity information, position information, and heading information. An established relationship may enable expectation(s) to be generated and the correspondence between the expectation and the observation may be determined.

In some embodiments, the application information and/or the signal characteristics may have at least one established pattern which may indicate normal behavior versus fraudulent/malicious behavior. Accordingly, observation(s) on the application information and/or the signal characteristics may be checked for correspondence against the established pattern.

Generally, the established relationship and/or the established pattern (which may be part of a model) may be used to authenticate and/or assess the trust level of a message and/or node. The relationship and/or pattern may enable determining expectation(s) on the application information and/or the signal characteristics in accordance with the relationship and/or pattern. A model may be provided comprising at least one established relationship and/or established pattern.

Assuming a message is not fraudulent, the application information in a message, such as velocity and position, ought to substantially correspond to the signal characteristic that has an established relationship with the application information. The same holds for the other way around, where the signal characteristic(s) ought to substantially correspond to the application information in the message if there is an established relationship between the signal characteristic(s) and the application information. Using at least the established relationship, a security mechanism may determine an expectation and compare the expectation with an observation (i.e., observed information/value) (give or take an error/tolerance threshold). Accordingly, an observation on the signal characteristic and/or the application information (respectively), may be compared against the expectation for correspondence.

Assuming a message is not fraudulent, the application information and/or the signal characteristic(s) of the message ought to substantially correspond to an established pattern which indicates normal behavior (give or take an error/tolerance threshold). A lack of correspondence may indicate that the message is fraudulent. In some embodiments, expectation(s) may be generated on the basis of the established pattern. An observation may then be checked for correspondence with the expectation.

In some cases, external information may be used to modify the model such that the model may account for other factors. For instance, geographical information related to the path of the message may affect the established relationship between the application information and the signal characteristic(s). In another instance, geographical information may affect the assessment of the trust level of a particular message.

Accordingly, the application information may be used to verify the signal characteristics, and/or the signal characteristics may be used to verify the application information received. In some embodiments, the application information and/or the signal characteristic(s) may be verified against an established pattern and/or the model. Messages may then be discarded as being fraudulent and/or a trust level for a particular node may be assessed, i.e., increased or decreased depending on the verification.

Depending on the correspondence between the expectation and the observation (actually observed application information and/or signal characteristic(s)) and/or whether the observed application information and/or signal characteristic(s) matches the established pattern and/or the model, the trust level may be determined for a particular message and/or for a particular node (i.e., a node associated with a particular identifier). A particular message or messages may be discarded based on its trust level. The trust level may be determined based on a probabilistic framework, wherein the comparison between the actual observed information/value with the expectation to determine the trust level may be calculated by determining the probability of observing (the change in) the signal characteristic(s) given (the reported change in) the application information, and/or vice versa.

In some embodiments, a particular message purportedly from a particular node (e.g., as denoted by a node identifier) may be discarded based its trust level and the trust level(s) of other messages received from the same node. For instance, a trust level may be assigned to each received message, and an aggregate trust level may be calculated by taking into substantially all the trust levels assigned to messages associated with a particular node identifier. In some embodiments, a history of trust levels of received messages may be maintained such that an aggregate trust level for a particular node may be determined. The assumed relationship(s) and/or pattern(s) may be weak, and by accumulating trust levels before a message or messages are discarded, the chance of discarding a trustworthy message is advantageously decreased. For instance, if the aggregate trust level reaches a certain threshold, the messages associated with the particular node may be triggered to be discarded. In another instance, if the number of messages with a low trust level reaches a certain threshold, the messages associated with that particular node may be triggered to be discarded.

In some embodiments, a particular message or messages may be discarded based on its trust level and the trust level(s) of other messages received within a particular time interval. In some embodiments, a history of trust levels of received messages may be maintained over time (e.g., stored in a storage) such that a history of trust levels over time be determined. If a flood of fraudulent messages are being broadcasted in a short period of time (associated with a particular node identifier or not), the time series of low level trust scores may trigger that flood of fraudulent messages to be discarded.

In some embodiments, the trust level may take on one of a plurality of ranked values in accordance with a predetermined scale. Accordingly, if the expectation corresponds to the observed information, then the trust score may be incremented and/or increased according to the scale. In some embodiments, if the expectation does not correspond to the observed information, then the trust score may be decremented and/or decreased according to the scale. In yet some embodiments, if it cannot be determined from the observed information whether it is likely to be trustworthy or not (e.g., the difference between the expectation and the observed information falls within the margin of error or noise), then the trust level may remain the same. The extent of the adjustment of the trust level may depend on the amount of correspondence between the expectation and the observed information.

Generally speaking, each received message (or signal) allows a node to collect an information set, which comprises application information as well as signal characteristic(s) (i.e., physical information about the signal). If a particular node that is transmitting authentic application information in its messages, the signal characteristic of those messages should be consistent with the application information. Furthermore, it is expected that the relationship between the application information and physical information remains consistently preserved over time for a plurality of messages (in some cases taking into other factors). As such, an expectation of how the information set should vary over time may be determined based on the relationship between the application information and the physical information.

A determination may be made to see if the expectation of how the information sets should change matches with the actual change observed from the information sets. In some embodiments, the application information and the physical information from more than one message may be statistically combined (e.g., such as an average) to form a first information set. Then some other message(s) may be statistically combined to form a second information set. The first and second information set are then used for the expectation determination and comparison between the expectation and the observed change.

If a node and/or a message purportedly from that node is determined to be malicious (i.e., the level of trust reaches a predetermined level of distrust or maliciousness), further messages from that node may be ignored. In some embodiments, an indication may be stored associating that node as being malicious. In certain embodiments, the identifier associated with that node and the indication that it is malicious may be transmitted and/or broadcasted to other nodes in the ad hoc network to notify others of the detection.

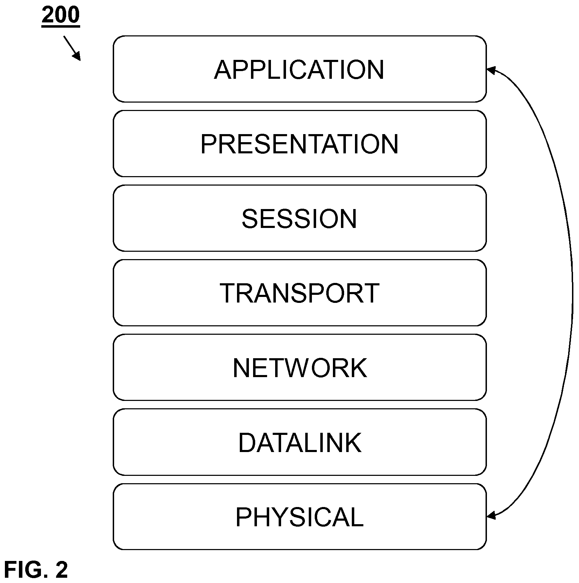

FIG. 2 shows an exemplary cross-layer communication in an illustrative network stack, according to one embodiment of the disclosure. The network stack may be implemented as part a communication module of the node. The application information, such as identifying information (e.g., node identifier), velocity information, heading information, and location/position information, may be extracted at the application layer, or any suitable higher layers as shown in the network stack **200** (by an application information extractor). The signal characteristic(s), such as tracking frequency information, received signal strength information/indicator (RSSI), bit error rate (BER) information, and signal to noise ratio (SNR) information, may be extracted from the physical layer, or any suitable layers lower than the application layer in the network stack **200,** by a signal characteristic measuring module.

Said illustrative network stack is merely an example, and one skilled in the art appreciates that any of the embodiments disclosed herein may not adhere to the network stack strictly. One skilled in the art further appreciates that a plurality of layers (arranged in upper layer(s) and lower layer(s)), similar to the one shown, are implemented in a network protocol used by the embodiments described herein.

Such comparison/verification between the information across layers may be referred to as cross-layer communication. The comparison and/or verification may be performed by an assessor. The assessor may be configured with at least one established relationship between the application information and the signal characteristic and/or at least one established pattern of the application information and/or the at least one signal characteristic

The application information extracted at the higher layer may be stored in a non-transient storage of a node. The signal characteristics extracted at the lower layer and/or detected from a sensor may also be stored in a non-transient storage of a node. Accordingly, the application information and the signal characteristics may be compared.

The standard paradigm demands that layers in such a network stack are only dependent on the layer right below, and simply assume that the lower level layers work. Generally, higher layers do not communicate or work with data in the lower layers. In contrast, the verification mechanism utilizes information across layers (i.e., a cross-layer design utilizing data from different layers) to enable a node to verify the reported information being transmitted over the network and/or assess the trust level of a message and/or a node.

In one embodiment, a first node receives a message purportedly from a second node. The message may include application information (at the application layer) having at least one of: identifying information, velocity information, heading information, and position information associated with the second node. The application information may be measured by sensor(s) in the second node, or may be derived from readings from the sensor(s). The application information generally represents a physical state of the second node, and said physical state reported by the second node may be verified against the signal characteristic(s) of messages transmitted by the second node.

From the application layer, the first node may extract and store the application information that was in the message (e.g., using an application information extractor). Furthermore, the first node may extract and store signal characteristic(s) from the physical layer or from other physical sensors at the first node relating to the message, such as, tracking frequency information, RSSI information, BER information, SNR information, and direction information. For instance, the signal characteristics may include: the tracking frequency that was used, the RSSI value, the BER value, the SNR value, and direction/angle from which direction the message came. Depending on the embodiment, the first node may store information measured by sensor(s) in the first node, such that information relating the two nodes may be determined (e.g., timestamp, relative velocity information, relative position information, distance information, direction/angle information).

Earlier or later, the first node may receive another message purportedly from the second node (or another message purportedly from a third, different node). The message may include (different or substantially the same) application information at the application layer, such as different velocity, same heading and different position. The first node may extract and store the application information. Furthermore, the first node may extract and store the signal characteristic(s) from the physical layer or from other sensors at the first node relating to this other message. Depending on the embodiment, the first node may store information measured by sensor(s) in the first node, such that information relating the two nodes may be determined (e.g., timestamp, relative velocity information, relative position information, distance information, and direction/angle information).

Having the application information and signal characteristic(s) from at least two messages, an expectation can be determined from the (change/difference in) the application information and/or the (change/difference in) the signal characteristic(s) on the basis of at least one established relationship between the application information and the signal characteristic(s). Accordingly, the application information and the signal characteristic(s) may be compared against each other for correspondence. The application information and/or the signal characteristics may also be checked against and/or compared with an established (or expected) pattern.

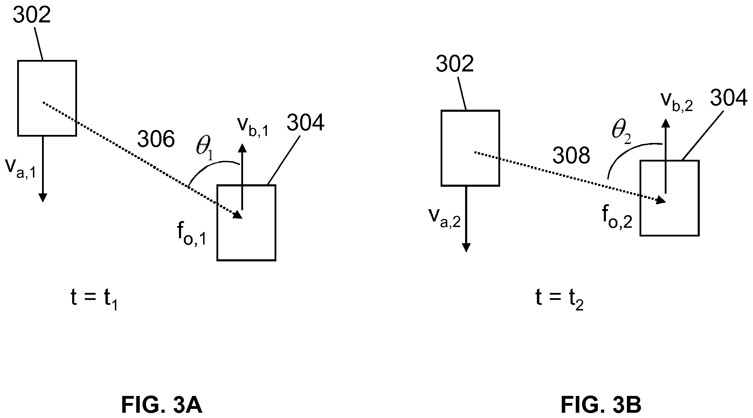

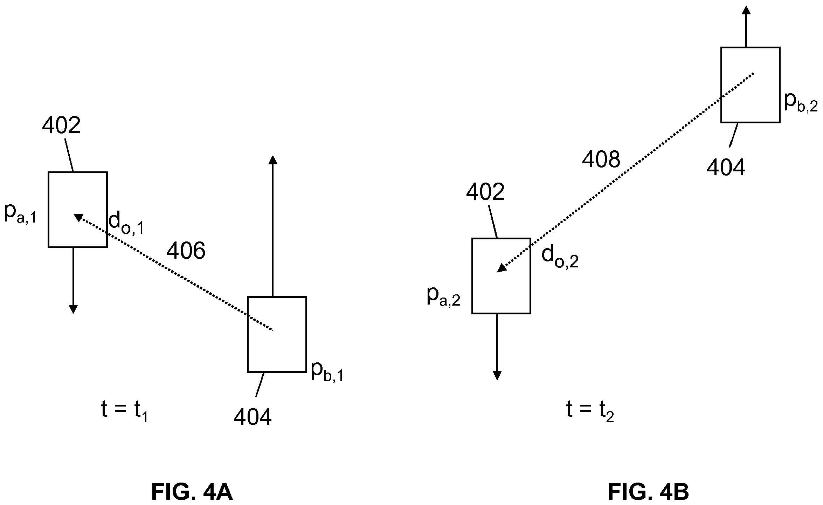

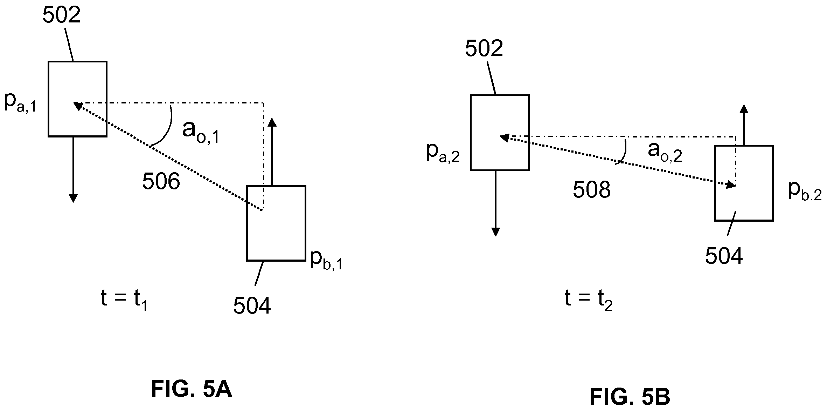

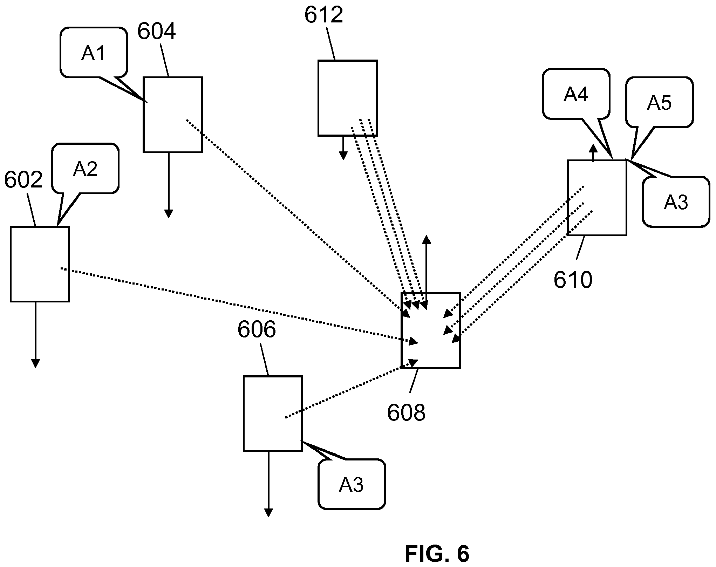

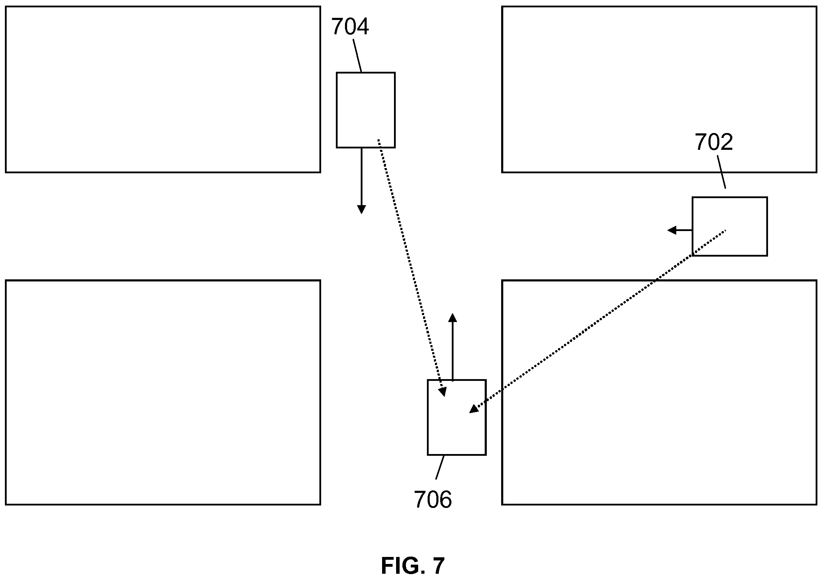

If the expectation correspond to what is actually observed, then the level of trust/authenticity may be raised. If the expectation does not correspond to what is actually observed, then the level of trust/authenticity may be decreased. For instance, a change in different tracking frequency (i.e., signal characteristic) may be expected from a change in the reported velocity information (i.e., application information), and/or vice versa. See e.g., **FIG. 3A-3B.** In another instance, a change in the distance between nodes (i.e., derived from application information) may be expected from a change in RSSI, BER, and SNR (i.e., signal characteristics). See e.g., **FIG. 4A-4B.** In yet another instance, a different angle (i.e., signal characteristic) from which the message is received may be expected from a change in the reported heading or position (i.e., application information), and/or vice versa. See e.g., **FIG. 5A-5B.** In another instance, the signal characteristic(s) of messages from purportedly the same node should not change drastically within a relatively short period of time (or expect the signal characteristics to remain substantially the same within the relatively short period of time). See e.g., **FIG. 6.** In yet another instance, messages from purportedly different nodes or having different application information should have sufficiently different signal characteristic(s). See e.g., **FIG. 6.** If further information is available, such as geographical/environmental information, which may affect the established relationship between the application information and the signal characteristic(s), then a model may be adjusted to account for the further information. See e.g., **FIG. 7.** In some embodiments, the further information may affect whether a particular message should be used in the verification. See e.g., **FIG. 7.**

The expectation may be determined from an established relationship between the application information and the signal characteristic(s) and/or an established pattern of the application information and the signal characteristics. In some embodiments, a value may be calculated for the expectation, or a threshold and/or range of values may be calculated for the expectation. Accordingly the observation may be compared against the value, the threshold, and/or range to determine correspondence.

In certain embodiments, an expectation comprises a direction of change (positive/negative/no change) in the application information and/or the signal characteristics between a plurality of messages and/or over time. By comparing the expectation and the actual observed values (i.e., the actual observed direction of change), the first node may determine whether to trust the information that was broadcasted purportedly by the second node.

Although **FIG. 2** illustrates using signal characteristics extracted from the lower layers, it is understood by one skilled in the art that other types of information may be used in the determination of the trust level. For instance, whether a known and trusted certificate was used (e.g., information in the application layer) may be taken into account for determining the trust level. In other words, the comparison of information across layers may be used to supplement or be used in combination with a certificate-based security system. If a known and/or trusted certificate was used, then the trust level may remain the same or be increased. If an unknown and/or untrusted certificate was used, then the trust level may remain the same or be decreased.

**FIGS. 3A-B** show exemplary messages transmitted at different times, according to one embodiment of the disclosure. The Doppler effect is the change in a frequency of a wave for an observer moving relative to its source. Accordingly, for nodes that are moving relative to each other (e.g., both moving nodes and/or one moving and one stationary node), the Doppler effect may be observed. Generally, the established relationship between the observed frequency $f_o$ at the receiver node (i.e., tracking frequency used by the signal) and the emitted frequency $f_b$ for an electromagnetic signal received from a source node at a receiver node is given by:

$$f_o = \left(1 - \frac{v \cdot \cos\theta}{c_m}\right) f_b$$

where $f_b$ is the frequency (i.e., tracking frequency information) at which the broadcast took place, $v$ is the magnitude of the relative velocity vector (e.g., sum of v_a,1 and v_b,1 vectors and sum of v_a,2 and v_b,2 vectors, as seen in **FIGS. 3A** and **3B** respectively) positive when two nodes are moving further apart), $\theta$ is the angle between the relative velocity vector and the line of sight between source and receiver node, $c_m$ is the speed of light in air and $f_o$ is the frequency which is observed by the receiver node. The relative velocity vector may be determined on the basis of the velocity information reported by the source node and the velocity information recorded by the receive node.

The relative velocity vector may be referred to generally as the relative velocity information needed to observe the Doppler effect. The cosine term is introduced to ensure that the appropriate component of the velocity is used for determining the Doppler effect. In some embodiments, the cosine term may be discarded if the angle $\theta$ is substantially small. For instance, in a highway situation where cars are substantially in front of each other travelling towards the same direction.

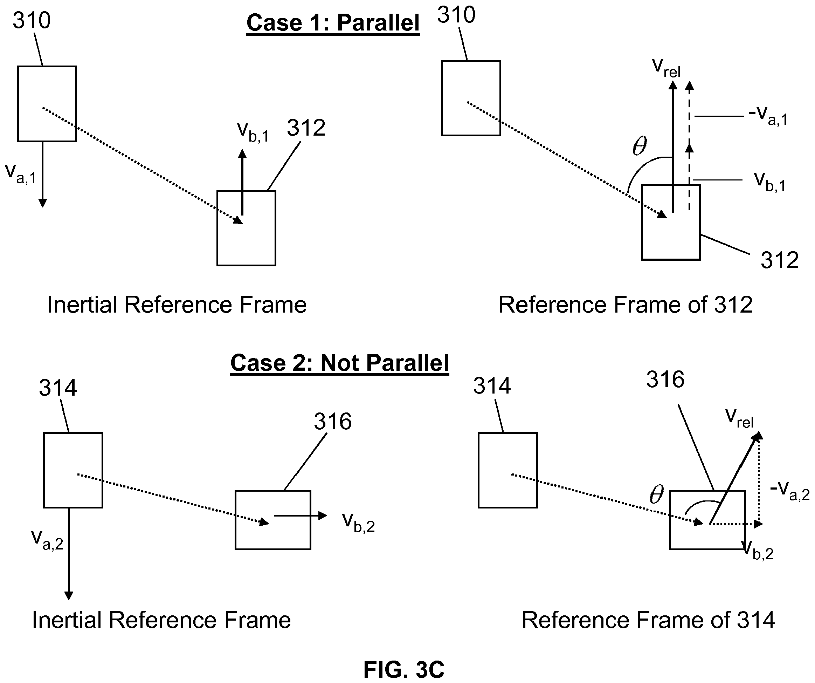

The cosine term may be used determine the appropriate component of the relative velocity vector for observing the Doppler effect, wherein $v$, the relative velocity vector, is multiplied by cosine of the angle information $\theta$. In the simplest case, if two nodes are traveling towards the same direction (e.g., one right behind another), the cosine term may be discarded in the Doppler effect calculations. Other less simple cases are discussed in detail in relation to **FIG. 3C**.

In some embodiments, the (relative) velocity information may be calculated from velocity information reported as a velocity vector defined within a particular reference coordinate system. For instance, position information may comprise coordinate data such as p1 =(0,0,0) for node 1, p2=(0,1,0) for node 2. The line of sight may then be represented as a vector based on p1 and p2. The velocity information may comprise vector information such as v1=(1,0,0) for node 1, v2=(0,3,0) for node 2. Accordingly the relative velocity (v_rel) of node 2 in the reference frame of node 1 is (-1,3,0). The angle between v_rel and the line of sight between p1 and p2 is the angle $\theta$.

The equation shown considers the classical (non-relativistic) Doppler Effect. This assumption may be made in cases where the velocity of the nodes are much less than the speed of light. For instance, this assumption may be made for nodes which are vehicles on the road or other type of node that travel much slower than the speed of light.

In principle, the velocity of the source node relative to the receiver node ought to be measured by perfect clocks at the source and the receiver for the calculation to be correct. In low-cost equipment used in vehicles or other suitable nodes, it is possible that the receiver node and the source node do not have perfect clocks. Accordingly, the issue with the error of the clocks at the receiver node and the source node may be solved by examining the difference in the Doppler effect between two messages (the errors cancel each other out due to the fact that only the difference is being considered by the Doppler effect calculation).

For determining the difference in Doppler shift between two messages, either the difference between the two observed frequencies or the ratio of the two observed frequencies could be used. The difference between two observed frequencies may be defined as:

$$f_{o,1} - f_{o,2} = f_b \left( \frac{v_2 \cos\theta_2 - v_1 \cos\theta_1}{c_m} \right),$$

and the ratio of the two observed frequencies may be defined as:

$$\frac{f_{o,1}}{f_{o,2}} = \left( \frac{1 - \dfrac{v_1 \cos\theta_1}{c_m}}{1 - \dfrac{v_2 \cos\theta_2}{c_m}} \right).$$

The subscripts 1 and 2 denote values associated with the first message and the second message, respectively. It has been assumed that $f_b$ is the same in both observations. In practice, the calculations may be precise to the order of approximately 5 km/h and may be used for nodes having velocities up to 1000 km/h, stemming from the assumptions in the formulas used.

A model comprising the above established relationship thus assumes that the opposite sides of the equation should equal (with a certain margin of error) each other if the tracking frequency information and the relative velocity information correspond. In other words, the signal characteristic(s) on the left hand side of the equations (i.e., tracking frequency information) is compared with the application information on the right hand side of the equations (i.e., the relative velocity information) for correspondence.

In **FIG. 3A**, at $t = t_1$, a (source) node **302** having a velocity $v_{a,1}$ transmits a first message **306** to a (receiver) node **304**. The receiver node thus observes a first tracking frequency information $f_{o,1}$ (i.e., the tracking frequency used by message **306**) at node **304**. The tracking frequency information is detected/determined by a signal characteristics measuring module or sensors at node **304**, and/or extracted from the information residing in one of the lower layers in the network stack by the signal characteristics measuring module.

Generally speaking, the tracking frequency refers to the results of the frequency tracking method that a radio device (of the node) employs. A radio device may change the frequency of the local oscillator and/or add phase to a signal (in either situation may change the frequency of the signal). Such a frequency offset may provide the difference between the local oscillator frequency and the frequency at which the signal was received. The tracking frequency may be referred to as a demodulation frequency which indicates the frequency used to demodulate the signal. The tracking frequency indicates the frequency used for the receiving node to receiving the signal.

In some embodiments, if the nodes travel at high velocities (e.g., 10000 km/h and/or higher), one skilled in the art appreciates that the effects of special relativity on the Doppler effect might be taken into account to improve on the model.

Node **302** reports its velocity (speed and heading) $v_{a,1}$ in the first message **306** (i.e., velocity information, preferably represented by a vector). Node **304** records its velocity $v_{b,1}$ (i.e., velocity information, preferably represented by a vector). $v_1$ is thus $|v_{b,1} - v_{a,1}|$. In some embodiments, the velocity information may be estimated by position information provided in the application information (i.e., velocity information calculated on the basis of two position information reported and/or recorded at two different times).

In **FIG. 3B**, the node **302** having a velocity $v_{b,1}$ transmits a second message **308** to a (receiver) node **304**. The second message may be reportedly associated with being transmitted from node **302** (e.g., the message may include an identifier of node **302**). The second message may be transmitted at $t = t_2$, where $t_1 \neq t_2$, i.e., a different point in time. The node **304** thus observes a second tracking frequency information $f_{o,2}$ at node **304** (i.e., the tracking frequency used by message **308**). Node **302** reports its velocity $v_{a,2}$ in the second message **308** (i.e., velocity information). Node **304** records its velocity $v_{b,1}$ (i.e., velocity information). $v_2$ thus equals $|v_{b,2} - v_{a,2}|$ (i.e., relative velocity information).

Given the established relationship between the change in tracking frequency information and the change in magnitude of the relative velocity vector (and/or in angle $\theta$), an expectation in tracking frequency between two messages (ratio and/or difference) reportedly from the same node may be determined from the observed/reported relative velocity vector magnitudes $v_1$ and $v_2$ (i.e., application information), by evaluating the equations using values for only a subset of the variables. Alternatively or additionally, an expectation of change (e.g., amount of change or a direction in the change) in relative velocity vector magnitudes (e.g., $v_1 - v_2$) may be determined from the observed tracking frequency information $f_{o,1}$ and $f_{o,2}$ (i.e., observed signal characteristic).

In some embodiments, the expectation is a value, which may be accompanied with a margin of error (e.g., error threshold, tolerance threshold, etc.). If the observed information matches the expectation within the margin of error, then the first and/or the second message is considered to be authentic, or likely authentic. Accordingly, the trust level for a particular message and/or a particular node (identified by a node identifier) may be adjusted depending on whether the appropriate/expected amount of Doppler effect is observed.

Mobile nodes may move in any arbitrary direction with respect to each other at any given time. The (receiving) node may therefore take the angle of the direction into account such that the relative velocity information may be appropriately determined. In a highway situation, the angle component of the relative velocity is assumed to be relatively small and should not appreciably make a difference. In urban environments, this angle component of the relative velocity can change quickly.

In this exemplary embodiment, information associated with two messages are compared. However, one skilled in the art may statistically combine information from more than two messages to form a first information set 1. Also, information from more than two (other) messages may be combined to form a second information set 2. The first information set 1 may be used for $f_{o,1}$ and $v_1$, and the second information set 2 may be used for $f_{o,2}$ and $v_2$. Accordingly, authenticity may be determined for a plurality of messages and/or for a particular node. Such an implementation (i.e., using multiple messages to form an information set) as long as the node broadcast messages sufficiently frequently.

In some embodiments, the calculation may be performed in three-dimensional space. Rather than adjusting the relative velocity information using the cosine term, a plane may be determined in which the calculation may be made. The positions of the receiving node and the transmitting node defines a first line. The relative velocity vector also defines a second line. The plane to be used for the calculation may then be the plane spanned by the first and second lines. Three-dimensional calculations may be particularly useful where movement in the z-direction is likely, such as airplanes, or highways/road junctions having various elevations.

An average may be easily determined for application information and/or signal information over time for use in calculations if the line and/or the plane defined by the receiving node and the transmitting node does not substantially change.

The Doppler effect model may be implemented in various ways, depending on the relative positioning and direction of travel of the two nodes. Because the relative velocity information relevant for the Doppler effect is the velocity component in the line of sight path, and the velocity information may be represented within the reference frame of either/both nodes, the angle information is sometimes accounted for in the Doppler effect calculation. Depending on how the two nodes are arranged in relation with each other, the angle information may be determined or used in various ways, such that the appropriate component may be calculated appropriately (i.e., by multiplying the relative velocity information (vector) by the cosine of the angle information).

In the simplest embodiment, two nodes are traveling one behind another towards the same direction in parallel, e.g., in a highway situation. The Doppler effect accounting for the velocity in the line of sight path is sufficient for the calculations (i.e., the relative velocity information is determined simply by adding the two velocity vectors), and the angle information for the calculations may be assumed to be substantially zero so that the cosine term may be discarded.

In a less simple embodiment, the two nodes are traveling in opposite directions but the velocity vectors are still in parallel with each other. This case is illustrated as case 1 in **FIG. 3C**. Because the two nodes are not along a straight line, the Doppler effect takes the angle information into account when determining the appropriate component of the relative velocity between the two nodes. The angle information comprises the angle between the relative velocity vector v_rel and the line of sight path between nodes **310** and **312**. This angle information is the same as the angle between the velocity vector v_b,1 and the line of sight path between the two nodes.

In a even less simple embodiment, the two nodes are traveling in directions not parallel with each other. This case is illustrated as case 2 in **FIG. 3C**. The relative velocity vector v_rel may be calculated from adding the velocity vectors v_a,2 and v_b,2. Then the angle information to account for the appropriate velocity component is defined to be the angle between v_rel and the line of sight path between nodes **314** and **316**. As a result, the appropriate component of the relative velocity information for the Doppler effect calculation may be determined based on v_rel and the angle information.

**FIGS. 4A-B** shows exemplary messages transmitted at different times, according to one embodiment of the disclosure. Another established relationship between the application information and the signal characteristic(s) is the inverse or positive relationship between the distance information and signal characteristics related to signal strength and/or error rate. As the distance between two nodes grows larger, the signal strength is expected to be weaker, and vice versa.

In some embodiments, if the distance information has increased between two (or more) messages (i.e., the two nodes are traveling farther away), then the signal characteristics relating to signal strength is expected to be degraded/weaker in the two messages. The distance information may be determined from position information in the application information, by determining a distance on the basis of position information of two nodes. In some embodiments, the distance information may be derived/inferred from velocity information and/or heading information in the application information. For instance, the distance information may include whether the distance has increased or decreased, on the basis of the velocity information and/or heading information. The signal characteristics relating to signal strength may include at least one of: received signal strength indicator (RSSI) information, bit error rate (BER) information, signal to noise ratio (SNR) information, etc. RSSI information is inversely related to distance, i.e., signal strength decreases when distance increases. BER information is positively related to distance, i.e., error rate increases when distance increases. SNR information is inversely related to distance, i.e., SNR decreases when the distance increases.

In **FIG. 4A**, at $t = t_1$, a (source) node **404** transmits a first message **406** to a (receiver) node **404,** having application information $p_{b,1}$ (e.g., position information, velocity information, heading information). The first message may be reportedly associated with being transmitted from node **404** (e.g., the message may include an identifier of node **404**). At about the same time, the receiver node may measure and/or record application information at the receiver node (e.g., position information, velocity information, heading information). The application information recorded in the receiving node and the application information in the first message may be used to determine the distance information $d_{o,1}$ between the two nodes. Signal characteristic(s) may be measured on the basis of the first message at node **402** by a signal characteristic measuring module or sensors at node **402,** and/or extracted from the information residing in one of the lower layers in the network stack by the signal characteristics measuring module.

In **FIG. 4B**, the node **404** transmits a second message **408** to a (receiver) node **402,** having application information $p_{b,2}$ (e.g., position information, velocity information, heading information). The second message may be reportedly associated with being transmitted from node **404** (e.g., the message may include an identifier of node **404**). The second message may be transmitted at $t = t_2$, where $t_1 \neq t_2$, i.e., a different point in time. At about the same time, the receiver node may measure and/or record application information at the receiver node (e.g., position information, velocity information, heading information). The application information recorded in the receiving node and the application information reported in the first message may be used to determine the distance information $d_{o,2}$ between the two nodes. Signal characteristic(s) may be measured on the basis of the second message at node **402** by the signal characteristics measuring module or sensors at node **402,** and/or extracted from the information residing in one of the lower layers in the network stack by the signal characteristics measuring module.

On the basis of the inverse or positive relationships between the distance information and the signal characteristics related to signal strength and error rate, a change in the signal characteristic for a plurality of messages may be compared against a change in the distance information for that plurality of messages to determine whether the two changes correspond with the established inverse or positive relationship. The comparison on the basis of the established relationships may be performed by an assessor in the node. For instance, an increase in (positive change) the received signal strength information of at least two messages may be checked to determine whether the distance information has decreased for that at least two messages. If correspondence is found, the trust level may be raised. If correspondence is not found, then the trust level may be lowered.

In an ideal radio channel, the received signal carrying a message would include of a single direct path signal, which would provide a perfect reconstruction of the transmitted signal. However, in practice, the received signal may be modified during transmission in the channel, and the signal characteristics are thus affected. To account for such effects in an imperfect channel, several assumptions have been considered to ensure the assessor may use the signal characteristic in assessing the trust level in a substantially reliable manner on the basis of the established relationship between the signal characteristic and the distance information.

A received signal may include a combination of attenuated, reflected, refracted and diffracted replicas of the transmitted signal. In wireless communications fading is a deviation of the attenuation that a carrier-modulated telecommunication signal experiences over a certain propagation media. The fading may vary with time, geographical position and/or radio frequency, and is often modeled as a random process.

The terms slow and fast fading refer to the rate at which the magnitude and phase change imposed by the channel on the signal changes. The coherence time is a measure of the minimum time required for the magnitude change of the channel to become uncorrelated from its previous value. Alternatively, the coherence time may be defined as the maximum time for which the magnitude change of a channel is correlated to its previous value. This consideration of the coherence time enables the use of signal characteristics of a plurality of messages to be used reliably in the assessor (e.g., ensuring that the change observed in the signal characteristic is not due to fading present in the channel).

Slow fading arises when the coherence time of the channel is large relative to the delay constraint of the channel. In this regime, the amplitude and phase change imposed by the channel can be considered roughly constant over the period of time. Fast fading or small scale fading occurs when the coherence time of the channel is small relative to the delay constraint of the channel. In this regime, the amplitude and phase change imposed by the channel varies considerably over the period of use.

Small scale fading may be important for vehicular communications since the small scale fading may attenuate the transmitted signal by as much as 30 dB (the received signal power is reduced by a factor of 1000 times). For that reason, small scale fading is considered to ensure it does not substantially affect the signal characteristics being used in the assessor. In general, it has been shown that the channel behavior is expected to change every half a wavelength. In case of vehicular communications or any suitable communications in an ad hoc network, the channel is expected to change according to the wavelength of the communications protocol used. In some embodiments, IEEE 802.11p, which operates at 5.9 GHz (wavelength of about 5 cm), leads to signals having a half-wavelength of 2.5 cm. This value can be used to calculate the coherence time of the channel. If the nodes (e.g., vehicles) are moving with an average speed of 100km/h (e.g., on the highway) or 27.7 m/s, the coherence time of the channel is:

$$t_{coherence} = \frac{0.025m}{27.7m/s} = 0.9m\sec$$

This shows that the channel behavior may remain more or less the same for 0.9ms at a time, or that a node traveling in the network with 100 km/h speed would need 0.9 ms to get from one fading deep of the channel to the next one. In 802.11p, a typical data rate is 6 Mbps and a typical packet size is about 100 bytes (in some cases a couple/few hundred of bytes may be tolerable), which means that the time needed to transmit a packet (or message) is:

$$t_{packet} = packetsize(bits)/datarate = 100 \cdot 8/6 \cdot 10^6 = 0.134m\sec$$

The coherence time of the channel is much larger than the time it takes to transmit a message. Thus, the transmitted messages will entirely be transmitted either during a peak or during a deep of the channel. At lower speeds, the channel-coherence time increases, strengthening the relationship. Generally, this is the worst case scenario. In vehicular ad hoc networks, the relative velocity/speed between vehicles is small and small scale fading effect is a lot less important. Thus, the signal characteristics may be reliably used in the assessor.

The signal characteristics relating to signal strength and error rate may include at least one of: received signal strength indicator (RSSI) information, bit error rate (BER) information, signal to noise ratio (SNR) information, etc. More than one of the signal characteristic may be used as a way to provide redundancy in comparing the application information against each of the signal characteristics related to signal strength and error rate. Redundancy may provide a higher confidence in the results, by ensuring that the established relationship is present for a plurality of signal characteristics.

In some embodiments, the SNR information and the BER information may be used interchangeably, if one of them is not readily available. The usage of BER information may be preferably in some cases because it is commonly measured in mobile networks.

FIGS. 5A-B shows exemplary messages transmitted at different times, according to one embodiment of the disclosure. A node (e.g., a car or road side unit) may be equipped with a sensor to measure angle information of receipt, e.g., using a directional sensitive antenna system. A source node may report application information relating to the physical position of a node (e.g., GPS coordinates). A receiver node receiving that application information is also aware of application information relating to the physical position of a node. An established relationship exists between the angle information (i.e., indicating the angle/direction at which the message was received) and the application information relating to the physical position of a node. A receiver node thus may determine whether the angle information corresponds with the application information. For instance, the receiver node may determine an expectation on the direction or angle information from which the message is received on the basis of the established relationship. Application information relating to the physical position of a node may include: position/location information, (a derivation of or inference from) heading information, (a derivation of or an inference from) velocity information, etc.

In FIG. 5A, at $t = t_1$, a (source) node 504 transmits a first message 506 to a (receiver) node 502, having application information $p_{b,1}$ (e.g., position information, velocity information, heading information). The first message may be reportedly associated with being transmitted from node 504 (e.g., the message may include an identifier of node 504). At about the same time, the receiver node may measure and/or record application information at the receiver node (e.g., position information, velocity information, heading information). The application information recorded in the receiving node and the application information in the first message may be used to determine derived angle information $a_{o,1}$ between the two nodes. Signal characteristic(s) (i.e., angle information from which the message was received) may be measured on the basis of the first message at node 502 by a signal characteristic measuring module or sensors at node 502, and/or extracted from the information residing in one of the lower layers in the network stack by the signal characteristics measuring module.

Generally, for a particular message, the application information (i.e., the position information and/or the derived angle information) is expected to correspond with the signal characteristic of that message (i.e., the angle information measured). Accordingly, an expectation on angle information may be determined on the basis of the application information of a particular message, and that expectation may be compared with the observed angle information (i.e., the signal characteristic measured by the receiving node) for correspondence. If the expectation and the observation substantially correspond, e.g., within an margin of error or tolerance threshold, then the trust level for the node purportedly transmitting that message may be raised. Otherwise, the trust level may be lowered. Alternatively or additionally, an expectation on the application information may be determined on the basis of the signal characteristic measured by the receiving node for a particular message. The expectation may then be compared with the observed application information reported in that message.

In some embodiments, the application information is compared with the signal characteristic for a plurality of messages. In FIG. 5B, the node 504 transmits a second message 508 to a (receiver) node 502, having application information $p_{b,2}$ (e.g., position information, velocity information, heading information). The second message may be reportedly associated with being transmitted from node 504 (e.g., the message may include an identifier of node 504). The second message may be transmitted at $t = t_2$, where $t_1 \neq t_2$, i.e., a different point in time. At about the same time, the receiver node may measure and/or record application information at the receiver node (e.g., position information, velocity information, heading information). The application information recorded in the receiving node and the application information reported in the first message may be used to determine derived angle information $a_{o,2}$ between the two nodes. Signal characteristic(s) may be measured on the basis of the second message at node 502 by the signal characteristics measuring module or sensors at node 502, and/or extracted from the information residing in one of the lower layers in the network stack by the signal characteristics measuring module.

Accordingly, a change in the angle information and/or a change in the application information may be observed. The change in the angle information is expected to correspond with a change in the application information (and vice versa) in accordance with the established relationship between the two. For instance, a change in the position information is expected to correspond with a change in the angle at which the message is received. If a source node is reporting different position information while the measured angle between the source node and the receiver node has not changed, the trust level for that source node may be lowered because the position information does not correspond with the measured angle.

FIG. 6 shows exemplary messages transmitted by various nodes, according to one embodiment of the disclosure. Established pattern(s) may exist for application information and/or signal characteristics, which may indicate fraudulent or trustworthy behavior. Accordingly, a model may be provided which is configured with the established pattern(s). A storage or registry of a node is provided to maintain a history of application information and signal characteristics. A database associating the application information and signal characteristics with the node identifier may be maintained in the storage. From the history of application information and/or signal characteristic, a node may determine whether the application information and the signal characteristic(s) correspond to the established pattern(s) in the model.

In some embodiments, an established pattern may define a pattern of normal behavior. For instance, the signal characteristics and/or application information associated with a particular node during a relatively short period of time is expected to remain substantially the same. The relatively short period of time depends on the particular type of ad hoc network and/or the node that is transmitting the message (e.g., how quickly the nodes are expected to move, how noisy the environment is). The relatively short period of time may be determined based on a period of time where the signal characteristics is expected to not fluctuate drastically. In some embodiments, the assessor may examine the history of signal characteristic(s) and the application information to determine whether the history exhibits the behavior. If the history does not exhibit normal behavior, the trust level for a node may be lowered.

In one embodiment, the model comprises an established pattern which expects that the signal characteristics of messages transmitted (consecutively) during a relatively short period of time to remain about the same. For instance, messages purportedly transmitted from node 612 to node 608 (e.g., messages having a node identifier of node 608 identifying the sender of said messages) is expected to have signal characteristics that are substantially the same or similar to each other. On the basis of messages received from node 612, node 608 may determine an expectation and a tolerance threshold for the signal characteristics. Said expectation and the tolerance threshold may be associated with the identifier of node 612. For instance, the node 608 may determine an expectation on the basis of the signal characteristic(s) a past message or an average of the signal characteristics of past messages. The tolerance threshold may be determined on the basis of variance of the signal characteristics of past messages (e.g., messages received before the receipt of a present message). Accordingly, the (observed) signal characteristic of a present message may be compared with the expectation to determine whether the signal characteristic correspond to the established pattern in the model. Correspondence may be found if the signal characteristic falls within the tolerance threshold. If correspondence is found, the trust level for node 618 may be raised. Otherwise, the trust level may be lowered.

In some embodiments, the model comprises an established pattern which expects that the application information (A3, A4, A5) of messages transmitted (consecutively) during a relatively short period of time to remain the same. For instance, messages purportedly transmitted from node 610 to node 608 (e.g., messages having a node identifier of node 610 identifying the sender of said messages) is expected to have application information that are substantially the same or similar to each other. On the basis of messages received from node 612, node 608 may determine an expectation and a tolerance threshold for the application information. For instance, the node 608 may determine an expectation on the basis of the application information a past message or an average of the application information of past messages. The tolerance threshold may be determined on the basis of variance of the application information of past messages (e.g., messages received before the receipt of a present message). Accordingly, the (observed) application information of a present message may be compared with the expectation to determine whether the application information correspond to the established pattern in the model. Correspondence may be found if the application information falls within the tolerance threshold. If correspondence is found, the trust level for node 618 may be raised. Otherwise, the trust level may be lowered.

Rather than detecting an established pattern of the application information and signal characteristics of messages purportedly from a particular node, an assessor may, instead or additionally, determine whether an established pattern across node identifiers is present during a relatively short period of time. If the nodes (and the environment) are not changing drastically, established pattern(s) may be used to detect fraudulent behavior.

In some embodiments, the model defines an established pattern where messages with different application information (e.g., node identifiers, position information, etc.) are expected to have sufficiently different signal characteristics during that relatively short period of time. Conversely, the model may define an established pattern where messages having different signal characteristics are expected to have sufficiently different application information. For instance, messages from node 602, 604, and 606 are expected to have sufficiently different application information (A1, A2, A3) and/or signal characteristics at a particular time. Otherwise, a fraudulent node may be transmitting messages spoofing as other fraudulent identities.

For instance, the assessor may observe different node identifiers while signal characteristics of messages from those purportedly different nodes remain substantially the same during the relatively short period of time. Accordingly, the assessor may determine whether the signal characteristics for a plurality of messages differ sufficiently between messages having different node identifiers. If they do differ sufficiently, then the application information and the signal characteristics correspond to the established pattern.

In another instance, the assessor may observe fraudulent application information when the substantially same signal characteristics are present while identifying information, position information, velocity information, heading information, etc. differs drastically during the relatively short period of time. Accordingly, the assessor may determine whether messages having substantially same signal characteristic(s) have substantially the same application information.

In some embodiments, comparing the physical characteristics amongst vehicles may also improve the assessment of the trust level. By leveraging situational awareness, the model may account for a realization that physical characteristics of received messages must vary from position to position and are different for vehicles having different speeds. As a result, the assessor may compare the physical characteristics of multiple cars with each other and see whether these physical characteristics disagree to a sufficient level such that the position information and speed information of these vehicles can be trusted. An example in which such a comparison is useful would be the following: suppose that Car A is in a parking spot or parking garage. As soon as its driver turns on car1, the in-car system begins to build up its world view. Car A thus builds a registry with all cars within reach together with the respective speed information, heading information and/or position information,). Furthermore, Car A builds a registry of signal characteristics. Now suppose that this world view includes of 50 cars, of which 20 are created by an attacker using a laptop. The assessor may advantageously compare the physical characteristics of these 50 cars and find that 20 of them have very similar signal characteristics (and alternatively/additionally that no packet collisions took place), which could indicate that an attacker, from one point of the environment (e.g., using a particular piece of hardware), is maliciously generating application data for multiple cars. Accordingly, the application information belonging to the 20 cars could then be discarded as untrustworthy, and/or the trust level for those 20 cars may be lowered.

FIG. 7 shows exemplary messages transmitted by various nodes within a geographical environment, according to one embodiment of the disclosure. Established relationships may be augmented or adapted in accordance with external information about the environment and/or the situation. In some embodiments, the model itself may be augmented or adapted in assessing the trust level of a node. The external information may include geographical information of the environment surrounding the receiving node and/or the source node. Nodes may be configured with geographical information from a map of the environment or access thereto. The node thus may determine geographical information of the environment surrounding a particular position/location on the basis of that map. Exemplary geographical information may include obstruction information, density information, temperature information, air pressure information, humidity information, weather information, landscape information, air quality information, and any suitable environmental information that could affect the propagation of a signal (i.e., thereby affecting the signal characteristics being used by the assessor). Accordingly, at least one known relationship may exist between the geographical information and signal characteristic(s), either positively or inversely.

The geographical information may be derived from a node's sensors (e.g., environmental sensors, measurement modules suitable for determining measurements on the environment, such as radar, sonar, etc.). In some embodiments, the geographical information may be derived from signal characteristics. For instance, poor signal characteristics may indicate obstruction and/or poor signal environment.

In some embodiments, the geographical information may be particular to a line of sight path between two nodes. A sensor may be provided at the node to detect the geographical information in the line of sight path. Application information comprising position information (or an inference of the position information from other application information) may be used to determine a line of sight path. Using that determined line of sight path, the node may determine the geographical information in the line of sight path.

In one embodiment, a node having geographical information (e.g., node 706) may estimate the probability that another node (e.g., node 702 around the corner) can be heard, i.e., whether node 706 should receive a message (of a relatively high quality) from node 702. Several ways of accounting for the geographical information is available. For instance, the node may, on the basis of the geographical information, adapt the established relationship between the application information and signal characteristics. Accordingly the model having the established relationship is modified in accordance with a known relationship between geographical information and the signal characteristic(s).

For instance, the relationship between the distance between the nodes and the received signal strength information may be weakened (i.e., adapted) due to the obstruction present in the geographical information (e.g., in the line of sight path). The communication between the two nodes having an obstructed line of sight path may be difficult or of low quality due to high packet loss, low signal to noise ratio, etc. Conversely, node 706 receiving a message from node 704 having a substantially clear line of sight path may estimate a higher probability that node 704 can be heard. Accordingly the communication between these two nodes having a clear line of sight path may be easier or of higher quality (e.g., expecting less packet loss and higher signal to noise ratio).

On the basis of the adapted established relationship, the correspondence between the application information and the signal characteristic may be determined. If the signal characteristic indicates a weakened signal (as expected because of the obstruction), then the signal characteristic corresponds to the application information (i.e., where node **702** is purportedly located, e.g., the reported position information) in accordance with the adapted established relationship. If the signal characteristic indicates a strong signal (as expected because of the lack of obstruction), then the signal characteristic corresponds to the application information (i.e., where node **704** is purportedly located, e.g., the reported position information) in accordance with the adapted established relationship.

In another instance, the obstruction present in the geographical information may indicate that the signal characteristics cannot be used in the assessor because the signal characteristics are likely corrupted. The geographical information modifies/adapts the model for assessing the trust level, wherein the message received from node **702** may be discarded in the assessor in assessing the trust level.

In some embodiments, the information about the environment may be used to improve the assessment of the trust level. Such a mechanism would use geographical/environmental information (e.g., from a map) about the location and/or surroundings (of the node reporting the information) to verify whether the claimed speed, the claimed position, and/or the claimed heading are likely and/or possible. For example, when driving through a village in Italy, one could receive a message from a vehicle that claims to be driving at a speed of 80 km/h. Based on the knowledge of the location/surroundings from a map, the assessor may conclude that this vehicle is driving through a very narrow alley, which has many turns. Subsequently, the assessor may (modify the model and) determine that the claimed speed is likely to be incorrect/false, because it would not be possible for a vehicle to drive at 80 km/h through this alley. As a result, the trust level may be lowered. In some cases, due to the alley being present as an obstruction between the vehicle and the point of receipt, the assessor may expect the signal characteristics of message(S) from the vehicle to be degraded (e.g., low SNR, high BER, and/or low RSSI). If the degradation of signal characteristics is also observed, the trust level may be (further) lowered (or the combination of observed improbable claimed speed and the degradation of signal characteristics may lead to the trust level to be lowered). In another example, when driving on the highway, a vehicle may claim to be driving perpendicular to it

(e.g., based on the claimed heading information). Based on a map, the assessor one might know that there is no road perpendicular to the highway, but rather that it is a swamp / forest / steep mountain / where driving is very unlikely. From that, the assessor may lower the trust on the content of the message based on the knowledge about the environment.

The use of environment information may work well for verifying reported application information such as speed information and/or position information. The environment information may alleviate the problem that positioning based on Global Positioning System may be unreliable from time to time. The environmental information can help verify that the information is correct. The environment information may also alleviate the problem of a malicious user reporting false application information. In either cases, the messages should not be trusted.

For some scenarios/situations/environments, some signal characteristics work better than others for the assessment of trust level. This is because the relationship between the application information and the signal characteristics and/or the pattern of the application information and/or signal characteristics may be stronger or weaker in different scenarios.

In this text we discuss several embodiments: a rather silent highway, a busy highway, a rural environment and an urban environment. In these exemplary embodiments, each illustrates a possible scenario in which different application information may attribute to different signal characteristics. Reference to several relationships are used in the examples, in particular in a ranking of importance. The relationships may include:

RELATIONSHIP 1: Position/distance information versus change in e.g., RSSI, BER, SNR (e.g., as discussed in **FIG. 4A-4B**),
RELATIONSHIP 2: Speed/velocity information versus change in tracking frequency - Doppler shift) (e.g., as discussed in **FIG. 3A-3B**), and/or
RELATIONSHIP 3: Position information versus change in angle information (angle of receipt) (e.g., as discussed in **FIG. 5A-5B**).

By having a ranking of importance of the relationships, the assessor may provide differing weights for the measurements, depending on the current scenario. In some embodiments, the application information and signal characteristics stored in a registry and/or a map (e.g., from a digital map, an electronic guidance system, etc.) may be used to determine in which scenario a vehicle is currently experiencing. Based on the determined scenario, the assessor may be adapted accordingly.

In some cases, the assessor may only use the more important relationship(s) in the assessment of the trust level. A logical relationship (hierarchy and/or decision tree) may be provided in accordance with the ranking of importance in the assessor when assessing the trust level. For instance, a sufficient condition to lower or raise the trust level based on a particular relationship may be defined.

Scenario 1: silent highway

A silent highway is characterized by only a few vehicles on the road, the speed is fairly constant and there is ample space between vehicles. There may be, by definition, no traffic jams on this highway. We assume in this scenario that there are few or no reflections, that the assessor may be able to assume the signal characteristics comprises substantially the Line of Sight (LOS) component in the communication channel and that the direction information may not vary drastically (except when one vehicle is overtaking another vehicle). As a result, signal characteristics about changes in SNR, changes in angle and/or changes in tracking frequency may be reliably used because the signal characteristics is not substantially affected by the particular scenario. Generally, speed information will not change much which means that Doppler shift is likely to be less useful in this case (unless there is a traffic jam or a traffic jam is forming).

In this scenario, the most valuable piece of information may be the change in distance, because the signal characteristics may be relied upon as a fairly accurate representation of the change in distance. Furthermore, the lack of reflections allows angle information to also be used reliably as a fairly accurate representation of position information. Doppler shift can act as a final check to verify that the speed of the observed vehicle has not changed. The assessor may assess the trust level in accordance with the following ranking of importance: RELATIONSHIP 1, RELATIONSHIP 3, and RELATIONSHIP 2 (1 and 3 may be switched).

Scenario 2: busy highway (shockwave/traffic jam scenario)

A busy highway may have many vehicles on the road, the speed may vary a lot (as a result of so-called "shockwaves") and vehicles may be relatively close-by. Traffic jams are possible. This scenario refers to the moments occurring right before a traffic jam or directly after. Thus, there may be frequent changes in speed. Also, because of these changes, vehicles are coming closer and further apart rapidly. Thus, there are likely large changes in velocity information and position information.

Generally speaking, small changes in application information are likely to lead to small changes in the signal characteristics. The small changes cannot be reliably used for assessing the trust level because it is likely to fall within an error tolerance or threshold. However, large changes in the application information is likely (with a higher confidence) to lead to a substantial (or observable) change in the signal characteristics.

Accordingly, the Doppler shift (RELATIONSHIP 2) and/or signal strength (RELATIONSHIP 1) are the more important measurements, because the observed changes in signal characteristics and/or the application information are expected to be large. In some embodiments, the assessor may attribute the most weight to Doppler shift measurements because the changes in speed are large. Furthermore, velocity changes are responsible for most accidents that happen at these times. For the signal strength (RELATIONSHIP 1) should be taken when measuring the signal strength, since due to quickly changing environment the noise level will not be constant. Direction (RELATIONSHIP 3) is of minor importance in this scenario because highways only have modest turns and one is mostly interested in changes of velocity. Accordingly, the assessor may assess the trust level in accordance with the following ranking of importance: RELATIONSHIP 2, RELATIONSHIP 1, and RELATIONSHIP 3 (2 and 1 may be switched).

Scenario 3: rural environment

In a rural environment, most measurements work equally well and they may be weighted equally. Driving in a rural environment is characterized by quick changes in speed (RELATIONSHIP 2), by frequent crossings (RELATIONSHIP 3) and varying distance to other vehicles (RELATINOSHIP 1). As such, for this scenario, the three measurements or two of the three could be used together to determine whether to increase or decrease the trust level of a particular node.

Scenario 4: urban environment

The urban environment is a difficult one. Many reflections may make the measurements of Doppler shift (RELATIONSHIP 2), direction (RELATIONSHIP 3) and signal strength (RELATIONSHIP 1) rather unreliable. In addition, vehicles are driving close to each other and often the roads are busy. To alleviate these issues, a vehicle may only consider line-of-sight (LOS) components only when assessing the level of trust.

For example, it is likely that between quite a number of vehicles a LOS component exists. If that is the case, many receivers will be able to extract that signal and some signal characteristics may still be available. In that case, change in velocity may be used reliably. Velocities in cities change abruptly by approximately 30 to 50 km/h. The corresponding change in tracking frequency can be detected and Doppler shift can be used to verify this information.

Direction might be used if a vehicle is taking a turn (the angle of reception will change rather quickly, before the vehicle disappears behind a building). The vehicle may determine from sensors of the car that the vehicle is taking a turn and thus rely on direction information (RELATIONSHIP 3) to assess the level of trust of vehicles around it.

Furthermore, if an LOS component is available it is fairly easy and accurately to measure from which direction the signal is coming.

The most unreliable measurement is the signal strength. Accordingly, the assessor may assess the trust level in accordance with the following ranking of importance: RELATIONSHIP 2, RELATIONSHIP 3, and RELATIONSHIP 1 (2 and 3 may be switched).

Due to the measurements having different reliability in different situations, varying ways to use them in the assessment is envisioned, particularly in the case of deceleration / acceleration on the highway and/or in the urban environment. The following example is given for the highway, but the same method may work equally well in an urban environment where changes in velocity are frequent.

Suppose that a vehicle at the highway driving 120 km/h decelerates at a rate of 9 m/s2, the vehicle trailing the vehicle that brakes will see (after 0,5 s) the following changes. The SNR may go 1-2 db (for the urban scenario the changes in SNR will be much more pronounced due to the higher relative changes in distance (this ranges from a few meters up to tens of meters). The Doppler effect may shift the peak in the spectrum by approximately 170 Hz. At this point in time, one of the measurements would already have been sufficient for deciding whether to raise or lower the level of trust because RELATIONSHIP 1 and RELATIONSHIP 2 are assumed to be strong/reliable. Accordingly, more weight may be given to measurements in RELATIONSHIP 1 and RELATIONSHIP 2 (when compared to the weight given to RELATIONSHIP 3) and/or at least one of the measurements in RELATIONSHIP 1 and RELATIONSHIP 2 provide a sufficient condition to raise or lower the level of trust.

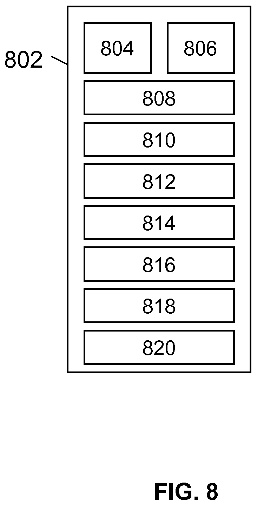

FIG. 8 shows an exemplary node and parts therein according to one embodiment of the disclosure. An exemplary node **802** may include a transmitter **804,** a receiver **806,** a communication module **808,** an application information extractor **810,** a signal characteristics measuring module **812,** a processor **814,** a storage **816** (i.e., computer readable non-transitory storage), an assessor **818,** and sensors **820.** These components may be interconnected via a communication bus, and the interoperation of said components may be provided by an operating system running on the processor of the node.

The transmitter may be configured to transmit messages to other nodes in an ad hoc network. The receiver may be configured to receive messages (e.g., an antenna) from other nodes in the ad hoc network. The transmitter and the receiver may be communicably connected to the communication module, which may be configured with a network protocol stack. The communication module may process incoming messages (e.g., packets, signals) and generate outgoing message. The communication module may be communicably connected to an application information extractor module, which may be configured to extract application information from incoming messages processed by the communication module (e.g., at the application layer or any suitable higher layers in the network protocol stack). A signal characteristic measuring module may be configured to measure the signal characteristic(s) of incoming messages (e.g., at a physical layer in the network protocol stack or any suitable layer in the stack). The application information extractor module and the signal characteristic measuring module may advantageously provide cross layer communication.

A processor may be provided for running at least one application (e.g., a road safety application). Sensor(s), e.g., environmental sensors, GPS or any suitable location sensors, etc., may be configured to measure application information related to the node, and/or geographical information). An assessor may be configured to provide a model, which may include the established relationship(s) and/or pattern(s) of the application information and/or signal characteristic(s). The assessor is configured to determine whether the application information and/or the signal characteristics correspond with established relationship(s)/pattern(s). The assessor may be communicably connected the storage (e.g., memory, flash drive, hard drive, etc.) to access application information and/or signal characteristics stored thereon.

With some modifications, one skilled in the art may extend the embodiments described herein to other architectures, networks, or technologies. For instance, the methods and systems described herein may be used with radar systems on ships, radio systems on airplanes, etc. Generally speaking, if there is a relationship and/or a pattern for the application information and the signal characteristics, the disclosed methods and systems enables the assessment of a level of trust on the reported application information. These systems can then be mounted on any manned or unmanned vehicle.

The various embodiments shown illustrates vehicles which may be travelling in opposite directions. One skilled in the art would appreciate that the embodiments are merely illustrative, and embodiments where vehicles are substantially traveling towards the same direction is also envisioned in this disclosure. The embodiments may also work in situations where vehicles are traveling in arbitrary directions, unless otherwise noted.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

**Claims**

1. A method for assessing a level of trust associated with a first node (302, 310, 314, 404, 504) in a mobile ad hoc network (100), said method comprising:

   receiving, at a second node (304, 312, 316, 402, 502)in the mobile ad hoc network, at least a first message (306, 406, 506) associated with the first node, the message having application information comprising velocity information and at least one signal characteristic comprising tracking frequency information, wherein the application information and the at least one signal characteristic have at least one established relationship with each other;
   receiving, at the second node in the mobile ad hoc network, at least a second message (308. 408, 508) associated with the first node, the message having application information comprising velocity information and at least one signal characteristic comprising tracking frequency information, wherein the application information and the at least one signal characteristic have at least one established relationship with each other;
   determining an expectation from the application information and/or the at least one signal characteristic of the first message on the basis of a model comprising a Doppler effect defining the relationship between 1) a difference or a ratio of a first tracking frequency information of the first message and a second tracking frequency information of the second message and 2) a first relative velocity information, relative between the first node and the second node, determined on the basis of a first velocity information in the first message and a second relative velocity information, relative between the first node and the second node, determined on the basis of a second velocity information in the second message;
   determining whether the expectation corresponds with an observation from the application information and/or the at least one signal characteristic for the the second message
   to assess the level of trust associated with the first node.

2. The method according to claim 1, wherein comparing the expectation with the observation comprises determining whether the expectation and the observation matches within an error threshold.

3. The method according to claim 1 or 2, wherein
   the expectation comprises a direction of change in the application information or at least one signal characteristics between the first and the second message;
   the observation comprises at least one signal characteristic or the application information, respectively, of the second message, and
   comparing the expectation with the observation comprises determining whether the observation has exhibited the direction of change.

4. The method according to any of the above claims, wherein:

   the application information comprises at least one of: position information associated with the first node;
   the at least one signal characteristic comprises the angle information indicating the angle at which the first and second messages are received at the second node.

5. The method according to claim 4, wherein comparing the application information and the at least one signal characteristic comprises:
   determining whether the angle information corresponds to the position information associated with the first node on the basis of position information associated with the second node.

6. The method according to any of the above claims, wherein:

   the application information comprises position information associated with the first node;
   the at least one signal characteristic comprises at least one of: signal strength information, bit error rate information, signal to noise ratio information of the plurality of messages received at the second node.

7. The method according to claim 6, wherein comparing the application information and the at least one signal characteristic comprises:

> determining whether a distance between the first node and the second node has changed on the basis of the position information associated with the first node and a position information associated with the second node; determining whether the distance corresponds with the signal strength information and/or the signal to noise ratio information on the basis of an inverse relationship, and/or determine whether the distance corresponds with the bit error rate information on the basis of a positive relationship.

8. A first node (802) in an ad hoc network of nodes, configured for assessing a level of trust associated with a second node in the ad hoc network, the first node comprising:
a receiver (806) for receiving at least a first and second message associated with the second node, each message having application information comprising velocity information and at least one signal characteristic comprising tracking frequency information, the first node compising:

> an assessor (818) configured to determine an expectation from the application information and/or the at least one signal characteristic of the first message on the basis of a model comprising a Doppler effect defining the relationship between 1) a difference or a ratio of a first tracking frequency information of the first message and a second tracking frequency information of the second message and 2) a first relative velocity information, relative between the first node and the second node, determined on the basis of a first velocity information in the first message and a second relative velocity information, relative between the first node and the second node, determined on the basis of a second velocity information in the second message; determining whether the expectation corresponds with an observation from the application information and/or the at least one signal characteristic for the the second message
> to assess the level of trust associated with the first node.

9. The first node further comprising:

> an application information extractor (810) for extracting the application information from the plurality of messages; an signal characteristic measuring module (812) for measuring the at least one signal characteristic of the plurality of messages; a storage (816) for storing at least one of: the application information, the at least one signal characteristic, and an output of the assessor for the plurality of messages.

10. A mobile ad hoc network comprising a plurality of nodes, each node configured according to the first node of claim 8 or 9

11. A computer program product, implemented on computer-readable non-transitory storage medium, the computer program product configured for, when run on a computer, executing the method according to any one of claims 1-7.

## Patentansprüche

1. Verfahren zur Beurteilung eines Vertrauensgrads, der mit einem ersten Knoten (302, 310, 314, 404, 504) in einem Ad-hoc-Mobilfunknetzwerk (100) assoziiert ist, wobei das Verfahren umfasst:

> Empfangen mindestens einer ersten Nachricht (306, 406, 506), die mit dem ersten Knoten assoziiert ist, an einem zweiten Knoten (304, 312, 316, 402, 502) im Ad-hoc-Mobilfunknetzwerk, wobei die Nachricht Anwendungsinformationen, die Geschwindigkeitsinformationen umfassen, und mindestens eine Signalcharakteristik aufweist, die Verfolgungsfrequenzinformationen umfasst, wobei die Anwendungsinformationen und die mindestens eine Signalcharakteristik mindestens eine hergestellte Beziehung zueinander aufweisen; Empfangen mindestens einer zweiten Nachricht (308, 408, 508), die mit dem ersten Knoten assoziiert ist, am zweiten Knoten im Ad-hoc-Mobilfunknetzwerk, wobei die Nachricht Anwendungsinformationen, die Geschwindigkeitsinformationen umfassen, und mindestens eine Signalcharakteristik aufweist, die Verfolgungsfrequenzinformationen umfasst, wobei die Anwendungsinformationen und die mindestens eine Signalcharakteristik mindestens eine hergestellte Beziehung zueinander aufweisen; Bestimmen einer Erwartung aus den Anwendungsinformationen und/oder der mindestens einen Signalcharakteristik der ersten Nachricht auf der Basis eines Modells, das einen Doppler-Effekt umfasst und die Beziehung

18

definiert zwischen 1) einer Differenz oder einem Verhältnis einer ersten Verfolgungsfrequenzinformation der ersten Nachricht und einer zweiten Verfolgungsfrequenzinformation der zweiten Nachricht und 2) einer ersten relativen Geschwindigkeitsinformation, relativ zwischen dem ersten Knoten und dem zweiten Knoten, die auf der Basis einer ersten Geschwindigkeitsinformation in der ersten Nachricht bestimmt wird, und einer zweiten relativen Geschwindigkeitsinformation, relativ zwischen dem ersten Knoten und dem zweiten Knoten, die auf der Basis einer zweiten Geschwindigkeitsinformation in der zweiten Nachricht bestimmt wird;

Bestimmen, ob die Erwartung einer Beobachtung entspricht, aus den Anwendungsinformationen und/oder der mindestens einen Signalcharakteristik für die zweite Nachricht,

um den mit dem ersten Knoten assoziierten Vertrauensgrad zu beurteilen.

2. Verfahren nach Anspruch 1, wobei ein Vergleichen der Erwartung mit der Beobachtung ein Bestimmen umfasst, ob die Erwartung und die Beobachtung innerhalb einer Fehlerschwelle übereinstimmen.

3. Verfahren nach Anspruch 1 oder 2, wobei:

die Erwartung eine Änderungsrichtung der Anwendungsinformationen oder der mindestens einen Signalcharakteristik zwischen der ersten Nachricht und der zweiten Nachricht umfasst;

die Beobachtung mindestens eine Signalcharakteristik bzw. die Anwendungsinformationen der zweiten Nachricht umfasst, und

das Vergleichen der Erwartung mit der Beobachtung ein Bestimmen umfasst, ob die Beobachtung die Änderungsrichtung aufwies.

4. Verfahren nach einem der vorhergehenden Ansprüche, wobei

die Anwendungsinformationen mindestens eines umfassen von: Positionsinformationen, die mit dem ersten Knoten assoziiert sind;

die mindestens eine Signalcharakteristik die Winkelinformationen umfasst, die den Winkel angeben, in welchem die erste und die zweite Nachricht am zweiten Knoten empfangen werden.

5. Verfahren nach Anspruch 4, wobei das Vergleichen der Anwendungsinformationen und der mindestens einen Signalcharakteristik umfasst:

Bestimmen, ob die Winkelinformationen den mit dem ersten Knoten assoziierten Positionsinformationen entsprechen, basierend auf Positionsinformationen, die mit dem zweiten Knoten assoziiert sind.

6. Verfahren nach einem der vorhergehenden Ansprüche, wobei:

die Anwendungsinformationen Positionsinformationen umfassen, die mit dem ersten Knoten assoziiert sind;

die mindestens eine Signalcharakteristik mindestens eines umfasst von: Signalstärkeinformationen, Bitfehlerrateninformationen, Signal-zu-Rausch-Informationen der Mehrzahl von Nachrichten, die am zweiten Knoten empfangen wird.

7. Verfahren nach Anspruch 6, wobei das Vergleichen der Anwendungsinformationen und der mindestens einen Signalcharakteristik umfasst:

Bestimmen, ob ein Abstand zwischen dem ersten Knoten und dem zweiten Knoten sich geändert hat, auf der Basis der mit dem ersten Knoten assoziierten Positionsinformationen und einer mit dem zweiten Knoten assoziierten Positionsinformation;

Bestimmen, ob der Abstand den Signalstärkeinformationen und/oder den Signal-zu-Rausch-Informationen entspricht, auf der Basis einer umgekehrten Beziehung und/oder Bestimmen, ob der Abstand den Bitfehlerrateninformationen entspricht, auf der Basis einer positiven Beziehung.

8. Erster Knoten (802) in einem Ad-hoc-Netzwerk von Knoten, der so konfiguriert ist, dass er einen Vertrauensgrad beurteilt, der mit einem zweiten Knoten im Ad-hoc-Netzwerk assoziiert ist, wobei der erste Knoten umfasst:

einen Empfänger (806) zum Empfangen mindestens einer ersten und einer zweiten Nachricht, die mit dem zweiten Knoten assoziiert sind, wobei jede Nachricht Anwendungsinformationen, die Geschwindigkeitsinformationen umfassen, und mindestens eine Signalcharakteristik aufweist, die Verfolgungsfrequenzinformationen umfasst, wobei der erste Knoten umfasst:

einen Assessor (818), der so konfiguriert ist, dass er eine Erwartung aus den Anwendungsinformationen und/oder der mindestens einen Signalcharakteristik der ersten Nachricht auf der Basis eines Modells bestimmt, das einen Doppler-Effekt umfasst und die Beziehung definiert zwischen 1) einer Differenz oder einem Verhältnis einer ersten Verfolgungsfrequenzinformation der ersten Nachricht und einer zweiten Verfolgungsfrequenzinformationen der zweiten Nachricht und 2) einer ersten relativen Geschwindigkeitsinformation, relativ zwischen dem ersten Knoten und dem zweiten Knoten, die auf der Basis einer ersten Geschwindigkeitsinformation in der ersten Nachricht bestimmt wird, und einer zweiten relativen Geschwindigkeitsinformation, relativ zwischen dem ersten Knoten und dem zweiten Knoten, die auf der Basis einer zweiten Geschwindigkeitsinformation in der zweiten Nachricht bestimmt wird;

Bestimmen, ob die Erwartung einer Beobachtung entspricht, aus den Anwendungsinformationen und/oder der mindestens einen Signalcharakteristik für die zweite Nachricht,

um den mit dem ersten Knoten assoziierten Vertrauensgrad zu beurteilen.

9. Erster Knoten, ferner umfassend:

einen Anwendungsinformationsextraktor (810) zum Extrahieren der Anwendungsinformationen aus der Mehrzahl von Nachrichten;

ein Signalcharakteristik-Messmodul (812) zum Messen der mindestens einen Signalcharakteristik der Mehrzahl von Nachrichten;

einen Speicher (816) zum Speichern mindestens eines von: den Anwendungsinformationen, der mindestens einen Signalcharakteristik und einer Ausgabe des Assessors für die Mehrzahl von Nachrichten.

10. Ad-hoc-Mobilfunknetzwerk, umfassend eine Mehrzahl von Knoten, wobei jeder Knoten gemäß dem ersten Knoten nach Anspruch 8 oder 9 konfiguriert ist,

11. Computerprogrammprodukt, das auf einem computerlesbaren, nicht-transitorischen Speichermedium implementiert ist, wobei das Computerprogrammprodukt so konfiguriert ist, dass es bei Ausführung auf einem Computer das Verfahren nach einem Ansprüche 1 bis 7 ausführt.

**Revendications**

1. Procédé pour évaluer un niveau de confiance associé à un premier nœud (302, 310, 314, 404, 504) dans un réseau ad hoc mobile (100), ledit procédé comprenant :

recevoir, au niveau d'un second nœud (304, 312, 316, 402, 502) dans le réseau ad hoc mobile, au moins un premier message (306, 406, 506) associé au premier nœud, le message ayant une information d'application comprenant une information de vitesse et au moins une caractéristique de signal comprenant une information de fréquence de suivi, dans lequel l'information d'application et la au moins une caractéristique de signal ont au moins une relation établie l'une avec l'autre;

recevoir, au niveau du second nœud dans le réseau ad hoc mobile, au moins un second message (308, 408, 508) associé au premier nœud, le message ayant une information d'application comprenant une information de vitesse et au moins une caractéristique de signal comprenant une information de fréquence de suivi, dans lequel l'information d'application et la au moins une caractéristique de signal présentent au moins une relation établie l'une avec l'autre;

déterminer une attente à partir de l'information d'application et/ou de la au moins une caractéristique de signal du premier message sur la base d'un modèle comprenant un effet Doppler définissant la relation entre 1) une différence ou un rapport d'une première information de fréquence de suivi du premier message et d'une seconde information de fréquence de suivi du second message et 2) une première information de vitesse relative, relative entre le premier nœud et le second nœud, déterminée sur la base d'une première information de vitesse dans le premier message et une seconde information de vitesse relative, relative entre le premier nœud et le second nœud, déterminée sur la base d'une seconde information de vitesse dans le second message;

déterminer si l'attente correspond à une observation à partir de l'information d'application et/ou de la au moins une caractéristique de signal pour le second message afin d'évaluer le niveau de confiance associé au premier nœud.

2. Procédé selon la revendication 1, dans lequel la comparaison de l'attente avec l'observation comprend de déterminer si l'attente et l'observation correspondent dans un seuil d'erreur.

**3.** Procédé selon la revendication 1 ou 2, dans lequel l'attente comprend une direction de changement dans l'information d'application ou la au moins une caractéristique de signal entre le premier et le second message; l'observation comprend au moins une caractéristique de signal ou l'information d'application, respectivement, du second message, et

la comparaison de l'attente avec l'observation comprend de déterminer si l'observation a présenté la direction de changement.

**4.** Procédé selon l'une quelconque des revendications précédentes, dans lequel :

l'information d'application comprend au moins l'une parmi : des informations de position associées au premier nœud;

la au moins une caractéristique de signal comprend l'information d'angle indiquant l'angle auquel les premier et second messages sont reçus au niveau du second nœud.

**5.** Procédé selon la revendication 4, dans lequel la comparaison de l'information d'application et de la au moins une caractéristique de signal comprend :

déterminer si l'information d'angle correspond à l'information de position associée au premier nœud sur la base de l'information de position associée au second nœud.

**6.** Procédé selon l'une quelconque des revendications précédentes, dans lequel :

l'information d'application comprend une information de position associée au premier nœud;

la au moins une caractéristique de signal comprend au moins l'une parmi : une information d'intensité de signal, une information de taux d'erreur sur les bits, une information de rapport signal/bruit de la pluralité de messages reçus au niveau du second nœud.

**7.** Procédé selon la revendication 6, dans lequel la comparaison de l'information d'application et de la au moins une caractéristique de signal comprend :

déterminer si une distance entre le premier nœud et le second nœud a changé sur la base de l'information de position associée au premier nœud et d'une information de position associée au second nœud;

déterminer si la distance correspond à l'information d'intensité de signal et/ou à l'information de rapport signal/bruit sur la base d'une relation inverse, et/ou déterminer si la distance correspond à l'information de taux d'erreur sur les bits sur la base d'une relation positive.

**8.** Premier nœud (802) dans un réseau ad hoc de nœuds, configuré pour évaluer un niveau de confiance associé à un second nœud dans le réseau ad hoc, le premier nœud comprenant :

un récepteur (806) pour recevoir au moins un premier et un second message associés au second nœud, chaque message ayant une information d'application comprenant une information de vitesse et au moins une caractéristique de signal comprenant une information de fréquence de suivi, le premier nœud comprenant :

un évaluateur (818) configuré pour déterminer une attente à partir de l'information d'application et/ou de la au moins une caractéristique de signal du premier message sur la base d'un modèle comprenant un effet Doppler définissant la relation entre 1) une différence ou un rapport d'une première information de fréquence de suivi du premier message et une seconde information de fréquence de suivi du second message et 2) une première information de vitesse relative, relative entre le premier nœud et le second nœud, déterminée sur la base d'une première information de vitesse dans le premier message et une seconde information de vitesse relative, relative entre le premier nœud et le second nœud, déterminée sur la base d'une seconde information de vitesse dans le second message;

déterminer si l'attente correspond à une observation à partir de l'information d'application et/ou de la au moins une caractéristique de signal pour le second message afin d'évaluer le niveau de confiance associé au premier nœud.

**9.** Premier nœud comprenant en outre :

un extracteur d'informations d'application (810) pour extraire l'information d'application à partir de la pluralité de messages;

un module de mesure de caractéristiques de signal (812) pour mesurer au moins une caractéristique de signal de la pluralité de messages;

un dispositif de stockage (816) pour stocker au moins l'un parmi : l'information d'application, la au moins une caractéristique de signal, et une sortie de l'évaluateur pour la pluralité de messages.

10. Réseau mobile ad hoc comprenant une pluralité de nœuds, chaque nœud étant configuré selon le premier nœud de la revendication 8 ou 9.

11. Produit de programme d'ordinateur, mis en œuvre sur un support de stockage non transitoire lisible par ordinateur, le produit de programme d'ordinateur étant configuré pour, lorsqu'il est exécuté sur un ordinateur, exécuter le procédé selon l'une quelconque des revendications 1 à 7.

FIG. 1

**200**

```
┌─────────────────────────┐
│      APPLICATION        │◄┐
└─────────────────────────┘ │
┌─────────────────────────┐ │
│     PRESENTATION        │ │
└─────────────────────────┘ │
┌─────────────────────────┐ │
│        SESSION          │ │
└─────────────────────────┘ │
┌─────────────────────────┐ │
│       TRANSPORT         │ │
└─────────────────────────┘ │
┌─────────────────────────┐ │
│        NETWORK          │ │
└─────────────────────────┘ │
┌─────────────────────────┐ │
│        DATALINK         │ │
└─────────────────────────┘ │
┌─────────────────────────┐ │
│        PHYSICAL         │◄┘
└─────────────────────────┘
```

**FIG. 2**

EP 2 743 726 B1

FIG. 3A

FIG. 3B

## Case 1: Parallel

310

$V_{a,1}$

$V_{b,1}$ 312

Inertial Reference Frame

310

$V_{rel}$

$-V_{a,1}$

$\theta$

$V_{b,1}$

312

Reference Frame of 312

## Case 2: Not Parallel

314

316

$V_{a,2}$

$V_{b,2}$

Inertial Reference Frame

314

316

$V_{rel}$

$\theta$

$-V_{a,2}$

$V_{b,2}$

Reference Frame of 314

**FIG. 3C**

EP 2 743 726 B1

EP 2 743 726 B1

402

$p_{a,1}$    $d_{o,1}$

406

$p_{b,1}$

404

$t = t_1$

**FIG. 4A**

$p_{b,2}$

408    404

402

$p_{a,2}$    $d_{o,2}$

$t = t_2$

**FIG. 4B**

**FIG. 5A**

**FIG. 5B**

EP 2 743 726 B1

**FIG. 6**

FIG. 7

EP 2 743 726 B1

**FIG. 8**

**EP 2 743 726 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080209521 A